# EUROPEAN PATENT APPLICATION

(11) **EP 1 014 640 A2**
(43) Date of publication of application: **28.06.2000**
(21) Application number: 99307793.2
(22) Date of filing: 04.10.1999
(51) Int. Cl.: H04L 27/26, H04B 3/54, H04H 1/04

(54) **Multicarrier transmission on power lines**

(30) Priority: 22.12.1998 GB 9828373
(71) Applicant: NORTEL NETWORKS CORPORATION, Montreal, Quebec H2Y 3Y4 (CA)
(72) Inventor: Greenwood, John Christopher, Wiltshire SN15 4LX (GB); Rickard, Robin Paul, Harlow, Essex CM20 2AD (GB)
(74) Representative: Williamson, Brian

(57) **Abstract**

An Orthogonal Frequency Division Multiplexed (OFDM) communications system comprising a communication station. The communications station includes a an OFDM transmitter comprising an encoder for encoding digital information, a transmission means for transmitting said information and a sub-band allocation means arranged to allocate sub-bands by selecting from a set of pre-determined parameters.

## Description

### TECHNICAL FIELD

This invention relates to a communication systems and method of operation thereof and in particular to a system and method utilising Orthogonal Frequency Division Multiplexing (OFDM).

### BACKGROUND OF THE INVENTION

It is known to transport telecommunications signals over a plurality of different media including an electricity distribution or power transmission network. Delivering a telecommunications service in this manner is attractive as it avoids the need to install new cabling to each subscriber. By using existing electricity distribution cabling to carry telecommunications signals, significant cost savings are possible. International Patent Application WO94/09572 shows an electricity distribution network that carries telecommunications signals.

There are essentially two known methods for transmitting data over power lines. A first method uses the power signal itself, modifying the shape of the power signal at certain known points in response to the data that is to be carried. An example of this is shown in UK Patent GB 1,600,056. A second method uses a carrier signal having a different frequency from that of the power signal, the carrier signal being modulated by the data.

One of the problems with using power lines as a communications medium is that they are subject to noise and interference. A first type of noise is due to cables picking up radio signals such as broadcast AM radio signals and amateur radio band transmissions. Overhead cables are particularly prone to this type of noise. A second type of electrical noise is due to electrical equipment coupled to the power lines. Electric motors, thermostats and gas discharge lighting are particularly prone to generating noise. Noise propagates along the power lines and combines with communications signals. The level of noise can be high enough, and persist for long enough, to corrupt communications signals.

CATV and FWA suffer similar problems, though not necessarily from the same sources. For example, in CATV noise can result from ingress at the consumer connection and inter-modulation products from the TV carriers.

Noise can impose constraints when using the power line to carry data. The aforementioned patent application WO94/09572 shows an electricity distribution network which carries telecommunications signals and teaches that the amount of noise entering the network from the premises can be reduced by installing conditioning elements at each premises. This requires a considerable amount of work and expense.

As mentioned above, power line transmission is one of several ways for delivering communications to subscriber premises and is therefore sensitive to competition with existing copper wires and more recent alternatives such as optical fibre/coaxial cable CATV delivery and fixed wireless access FWA techniques. Therefore, there is a desire to provide a system that is capable of delivering an acceptable quality of service at a cost that is attractive to a subscriber. One of the aspects of a power line transmission system that is particularly sensitive to cost is the customer premises equipment (CPE). The customer premises equipment must be capable of delivering an acceptable quality of service and interfacing to equipment in a subscriber's premises.

A number of different modulation schemes may be used in the provision of data services over power line. The applicant has found a number of schemes to be inappropriate:
Spread spectrum in the context of access by time division is not well matched to this application because of its low spectral efficiency.
High order Quadrature Amplitude Modulation QAM (16 QAM and above) is spectrally efficient but relatively insensitive i.e. it requires a quite high signal to noise ratio for reliable reception.
Binary Phase-Shift Keying BPSK either employing raised cosine filtering or minimum shift keying is not sufficiently spectrally efficient for a robust solution to this application.

CATV and FWA can benefit from this type of bandwidth control, in the following ways, avoiding interfering carriers and the ability to control the data rate i.e. the used bandwidth to selected subscribers.

However, the applicant believes two schemes to be acceptable, as follows:
Quadrature Phase-Shift Keying QPSK on a single carrier with raised cosine filtering has sufficient spectral efficiency for including significant coding overhead to strengthen the link's robustness. It does however require adaptive equalisation (albeit with very slow adaptation speed requirement) to cope with frequency selective fading.
Orthogonal Frequency Division Multiplexing OFDM with QPSK modulation on the sub-carriers results in a spectral efficiency which is comparable to the above with contiguous frequency allocations. However, this technique is potentially superior in situations where the allocated spectrum is non-uniform and non-contiguous. There is no need for tapped delay line adaptive equalisers; instead, a simple channel compensation algorithm has to be included. Coding is required to make the radio interface robust.

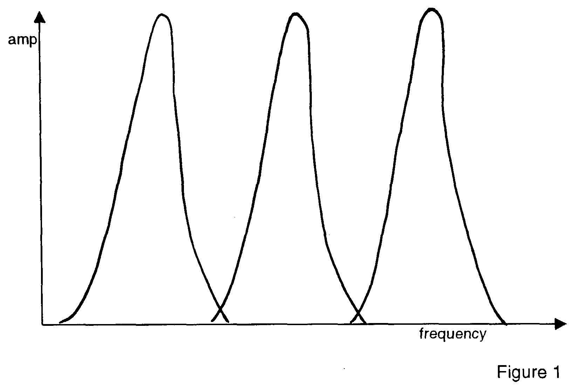

The use of OFDM provides a superior flexibility to fit into non-uniform and non-contiguous frequency allocations, while maintaining reasonable spectral efficiency. This results form the intrinsic nature of OFDM which is composed of a large number of simultaneously transmitted sub-carriers which are staggered in frequency each individually occupying a low bandwidth, as illustrated in Figure 1.

The scheme's flexibility comes about from the ability to designate which sub-carriers are to be activated and which are not. Regarding spectral efficiency, the signal composition results in an intrinsic spectrum fall-off outside of the active bandwidth commensurate with the bandwidth of each sub-carrier rather than with the total spectrum width. Thus relatively low excess bandwidths can be achieved.

Therefore, the spectral attributes of OFDM represent the major advantage in favour of its selection for use in power line telecommunication systems.

However, despite the clear advantages that could be achieved by the use of ODFM or CODFM in power line telecommunications systems there are presently no commercially available power line telecommunications systems that utilise an OFDM or COFDM modulation scheme.

It is submitted that OFDM or COFDM is not used commercially at present, at least in part, because of the problems of interference with signals from other users at adjacent frequencies and the difficulty in providing signal synchronisation.

These techniques are specifically advantageous in burst mode point to multi-point telecommunications systems. However, they are not limited specifically to that form of telecommunications system.

### SUMMARY OF THE INVENTION

The present invention seeks to minimise or overcome the above problem, and other problems that will become apparent from the following description.

According to a first aspect of the present invention there is provided an OFDM transmission protocol in which the base station transmits specific OFDM symbols embedded in normal traffic and the symbols are identified by larger than normal guard intervals.

Preferably, the OFDM transmission protocol is arranged for use in a power line telecommunications system.

Alternatively, the OFDM transmission protocol is arranged for use in a cable television telecommunications system.

Alternatively, the OFDM transmission protocol is arranged for use in a fixed wireless access telecommunications system.

Preferably, the symbols occur at 2 symbol increments, over a frame of more than 8 sequential symbol times.

Preferably, an out of lock indication is determined if the receiver cannot find a synchronous symbol in this period. Most preferably, if an out of lock indication is determined communications are suspended until frame has been recovered.

According to a further aspect of the present invention there is provided an OFDM transmitter comprising an encoder for encoding digital information, a transmission means for transmitting said information and a sub-band allocation means arranged to allocate sub-bands by selecting from a set of pre-determined parameters.

Preferably the parameters include mixtures of coding depth, modulation, power level and frequency allocation.

According to a further aspect of the present invention there is provided a method of operating an OFDM transmitter comprising the step of transmits specific OFDM symbols embedded in normal traffic and identifying said symbols by larger than normal guard intervals and/or particular modulation sequences of such symbols.

Preferably the symbols occur at 2 symbol increments, over a frame of more than 8 sequential symbol times and wherein an out of lock indication is determined by the frame if the receiver cannot find a synchronous symbol in this period.

According to a further aspect of the present invention there is provided an OFDM power line communications system comprising a power line for distributing electricity to a plurality of premises; and a base station coupled to the power line, which station uses a part of the power line external to the base station as a communications medium, the base station including an OFDM power line transmitter comprising an encoder for encoding digital information, a transmission means for transmitting said information down said power line and a sub-band allocation means arranged to allocate sub-bands by selecting from a set of pre-determined parameters.

Preferably the parameters include mixtures of coding depth, modulation and frequency allocation.

According to a further aspect of the present invention there is provided an OFDM cable television communications system comprising a cable television system for delivering television to a plurality of premises; and a base station coupled to the cable, which station uses a part of the cable external to the base station as a communications medium, the base station including an OFDM power line transmitter comprising an encoder for encoding digital information, a transmission means for transmitting said information down said cable and a sub-band allocation means arranged to allocate sub-bands by selecting from a set of pre-determined parameters

According to a further aspect of the present invention there is provided an OFDM fixed wireless access communications system comprising a base station including an OFDM fixed wireless access transmitter comprising an encoder for encoding digital information, a transmission means for transmitting said information and a sub-band allocation means arranged to allocate sub-bands by selecting from a set of pre-determined parameters

In, for example, power line systems, operating at this higher frequency band allows data communications to be transmitted at a higher bit rate because of the greater available bandwidth, in the range 2-10MHz. It has been found to be particularly advantageous to transmit communications signals within the frequency band 2 - 6MHz and in particular within the bands 2.2 - 3.5MHz and 3.8 - 5.8MHz. These bands fall between the medium wave and short wave bands used for broadcast radio transmissions and avoid the radio amateur band at 3.5 - 3.8 MHz. However, the present invention is not restricted to use within these bandwidths.

The applicant has found that with presently available OFDM systems packet length of around 5ms, and preferably 2-5ms offers advantageous results as the packet is long enough to carry a useful data payload and therefore provide a high system throughput, but short enough to statistically have a high chance of fitting between high-level noise bursts.

Preferred features may be combined as appropriate, and may be combined with any of the aspects of the invention, as would be apparent to a person skilled in the art.

The data that is carried in this system can be used for computer applications such as home working, file transfer, internet access and a wide range of other applications.

### BRIEF DESCRIPTION OF THE DRAWINGS

For a better understanding of the invention, and to show by way of example how it may be carried into effect, embodiments will now be described with reference to the accompanying drawings, in which:
Figure 1 illustrates a plurality of individual OFDM sub-carriers;
Figure 2 shows a system for communicating over a power line;
Figure 3 shows a power line communications network that couples to the system shown in figure 2;
Figure 4 shows typical background noise on a power line of the type shown in figure 1;
Figure 5 schematically illustrates a simplified transmitter in accordance with the present invention;
Figure 6 illustrates an OFDM power line telecommunications system in accordance with the present invention;
Figures 7 is a schematic illustration of a CATV deployment; and
Figure 8 is a schematic illustration of a FWA deployment.

### DESCRIPTION OF PREFERRED EMBODIMENTS

Before reviewing the application of OFDM or COFDM to power line telecommunications systems the technical field of power line telecommunications will be described in more detail.

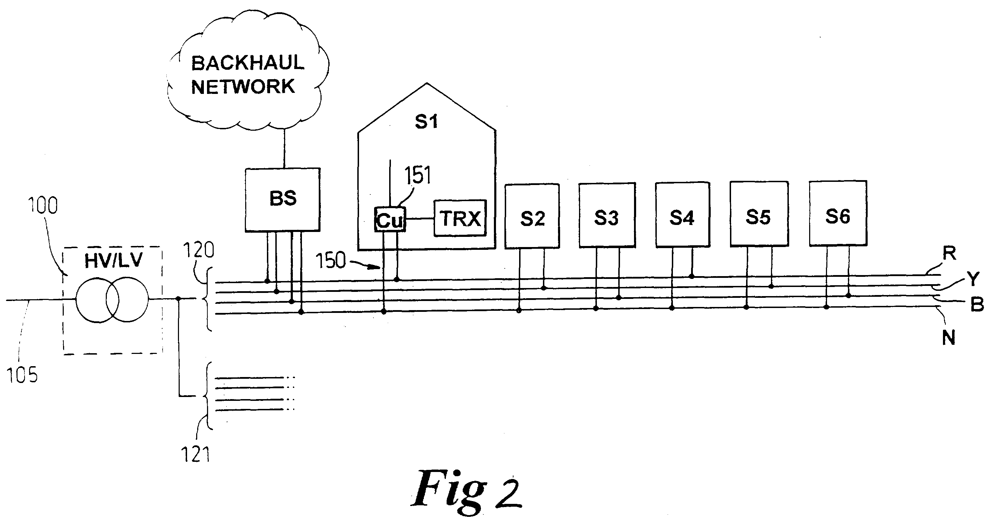

Figure 2 shows an electricity distribution network which is adapted to carry telecommunications signals. Mains electricity enters the network from an 11kV or 6.6kV transmission line 105 and is transformed by substation 100 into a 400V supply which is delivered over distribution cable 120 to customer premises S1 to S6. A substation 100 typically has between 4 and 8 distribution cables of the kind shown as 120, 121 leading from it, each distribution cable serving a number of premises. A distribution cable can extend for several hundreds of metres. Distribution cable 120 comprises blue, red and yellow phase lines and a neutral line. Subscriber communications stations TRX are typically located at houses or businesses. A full system will usually include more than the six premises shown here and will typically include a more elaborate tree-and-branch distribution network. Subscriber premises may receive a single phase electricity supply (230V) or a three-phase electricity supply (400V). Domestic subscriber premises usually receive a single phase supply and neighbouring subscriber premises are usually coupled to different phase lines. In figure 1 subscriber S1 is shown coupled to the red phase line, and subscriber S2 is coupled to the yellow phase line. This helps to distribute the load of the network evenly across the three phases.

A base station BS couples data communications signals onto distribution cable 120. The base station can be coupled to one or more distribution cables 120 at a point near to substation 100, as shown in figure 1, or it may be coupled to the bus bars at substation 100, the bus bars acting as a star point for serving all of the distribution cables. The communications signals propagate over the cable to transceiver stations at subscriber premises S1 to S6, with a coupling unit CU 151 coupling the communications signals to/from the power line. Subscriber premises couple to a phase line of distribution cable 120 by a branch line 150. In the upstream direction, communications signals are transmitted from the subscriber transceiver stations towards the base station. Communications signals are preferably transmitted between a phase line and neutral or earth.

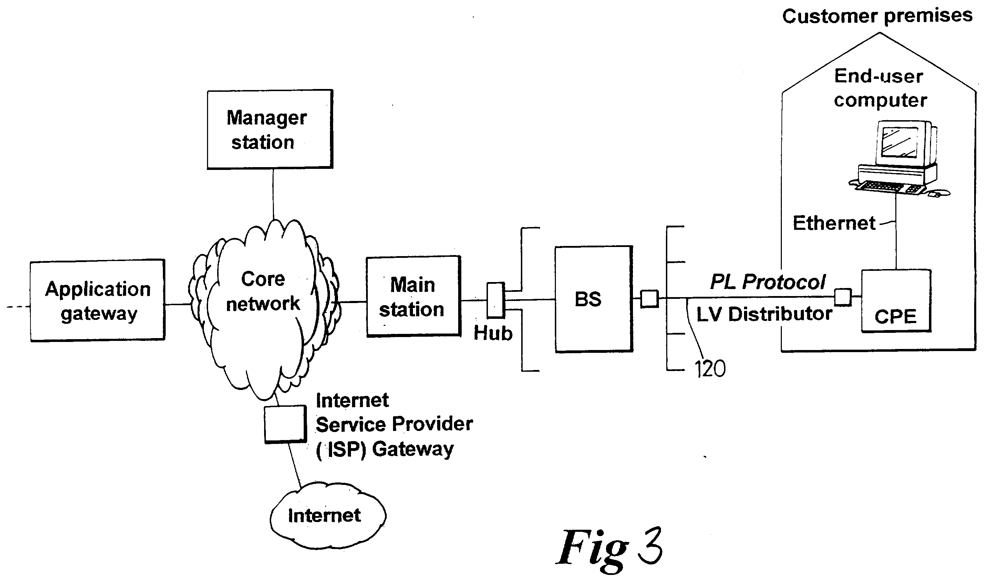

Figure 3 shows a top-level diagram of an example power line communications (PL) system configuration. The end-user computer connects to the customer premises equipment (CPE), within the customer premises. The CPE is connected to the power line base station using the power line protocol across the low-voltage LV power line. Communications traffic from multiple base stations accesses the core network through the main station via concentration in a hub, FDDI ring or Ethernet daisy chain. Within the core network a manager station allows remote management of the base stations and CPEs. Intranet and Internet access is available directly or indirectly via the core network, via gateways where appropriate.

### Data Transmission

Two frequency bands, referred to as PLT1 and PLT2, are used for power line transmission. These bands are 2.2-3.5 MHz and 4.2-5.8 MHz respectively. The upper and lower limits on each band are defined to minimise interference to (and from) other RF users, in particular medium wave, radio amateurs and short wave radios. The base station supports transmission and reception at both PLT1 and PLT2, providing frequency diversity to overcome any frequency-specific reception difficulties associated with an individual CPE. CPEs can use a tuneable modem to operate on the two bands.

The PL system delivers up to 10 Mbps peak bit rate, shared between all CPEs connected to a given Base station. This peak shared bit rate may be reduced, such as to 250kbps or 500kbps, or raised depending on available bandwidth and modulation schemes that are used. Reduced bit rates will also be supported to provide service to end-users at the extremes of the system range and end-users with adverse link transmission characteristics.

To compensate for difficult CPE-Base station links (e.g. CPEs at the extremes of transmission range) one or more reduced bit rates can be used.

The bit rate and frequency band for the CPE can be set via control signals from a network management unit.

The range over which a PL link can be reliably maintained is dependent on the loss characteristics of the electricity distribution cable and the noise levels experienced at the receiver. For reliable operation, it is expected that a carrier to (background) noise ratio (CNR) of greater than 10 dB is required.

The use of multiple frequency bands and multiple data rates allows individual CPEs to be configured to best match the transmission characteristics to the customer premises. Where appropriate, such parameters will be capable of being configured across the network from the management system. The base station supports the same frequency bands and data rates as the CPEs connected to it. When communicating with any CPE, the Base station will automatically switch to the frequency and data rate used by that CPE.

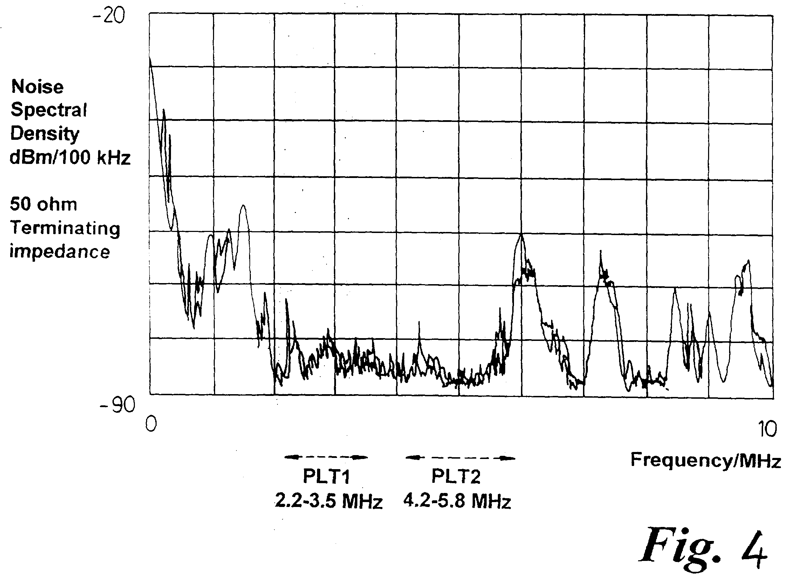

Figure 4 shows typical background noise on an underground power line across the frequency band 0-10MHz. It has been found to be particularly advantageous to transmit communications signals within the frequency bands 2.2 - 3.5MHz (PLT1) and 4.2 - 5.8MHz (PLT2). These bands fall between the medium wave and short wave bands used for broadcast radio transmissions and avoid the radio amateur band at 3.5 - 3.8 MHz. There is a reduced level of background noise in these bands and the radiation of power line communications signals in this frequency band causes minimum interference with radio receiver equipment at subscriber premises. Other frequency bands in the range of, for example, 2-30MHz can be used although it is preferred to use the lower frequencies because attenuation over the distribution cables is lower.

Data can be transmitted using a variety of line coding or modulation techniques. The applicant uses Quadrature Phase-Shift Keying QFSK modulation. The upstream and downstream transmissions preferably share a common frequency band with the upstream and downstream transmissions occupying different times.

The range over which the link can be reliably maintained is dependent on the loss characteristics of the electricity distribution cable and the noise levels.

Referring again to Figure 2, it can be seen that stations S1 to S6 are sited at increasingly greater distances from the base station. Signals transmitted to/from a station sited close to the base station, such as station S1, should be attenuated less than the signals transmitted to/from a station sited further away from the base station, such as station S6.

The factors affecting CNR of a signal received at a station are:
(i) attenuation for the path between the transmitting and receiving stations; and,
(ii) noise level on the power line.
This generally corresponds to an increasing carrier to noise ratio (CNR) for stations sited progressively closer to the base station.

It is possible to take advantage of this effect by transmitting data at a higher bit rate to those stations sited closer to the base station. This results in an improved data throughput for the system.

Referring again to Figure 4, two different frequency bands are provided for power line communications. The frequency band that a particular station uses (PLT1 or PLT2) can be selected to provide an optimum communications link. Different stations (on the same or different power lines served by the base station) may require different frequency bands due to the particular noise/interference conditions on the path to that subscriber. Providing a selection of both frequency bands and data rates allows each subscriber station served by a base station to reliably operate at as high a bit rate as possible. While two frequency bands are shown here, it is also possible to provide a larger number of frequency bands.

### PROTOCOL

The consistency, short transmission range and lack of Doppler offset of relatively static channels, such as a cable television, fixed wire access or a powerline distributor channel power, enables the use of a synchronous protocol. These features can be used to advantage with a burst mode time division duplex OFDM modem system.

A problem with burst mode OFDM is maintaining synchronisation with respect to multiple client stations from one base station. Relatively static powerline characteristics combined with a precise symbol timing from the base station allows all client stations to maintain synchronous communication with all base station traffic regardless of whether or not that traffic was addressed to a specific client station.

The basis of this synchronous protocol is that the base station transmits specific OFDM symbols embedded in normal traffic. These symbols occur at, for example, say 2 symbol increments, over a frame of, for example, say more than 8 sequential symbol times. These synchronous symbols are identified by larger than normal guard intervals, for example ¼ of a guard symbol instead of 1/8.

This has three functions: firstly to identify the synchronous frame; secondly, due to the larger guard intervals, to give greater timing accuracy; and thirdly to give out of lock indication. The out of lock indication is determined by the frame (normally 8) i.e. if the receiver cannot find a synchronous symbol in this period it suspends communications until it has recovered the frame.

### OFDM/COFDM

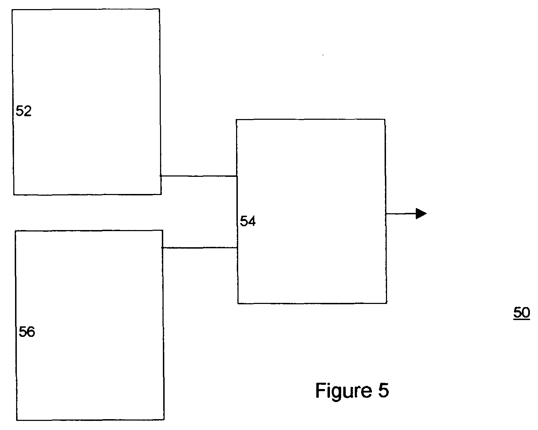

Figure 5 schematically illustrates a simplified OFDM power line modem transmitter 50 in accordance with the present invention. The OFDM power line transmitter 50 comprises an encoder 52 for encoding digital information and a transmission means 54 for transmitting said information down a power line. The transmitter 50 further includes a sub-band allocation means 56 arranged to allocate sub-bands by selecting from a set of pre-determined parameters. These parameters include mixtures of coding depth, modulation and frequency allocation, as will be desirable to a person skilled in the art when implementing a non-adaptive power line transmitter. This alleviates the problem of adaptively controlling the channel within a base station to multi client situation using time division multiplex.

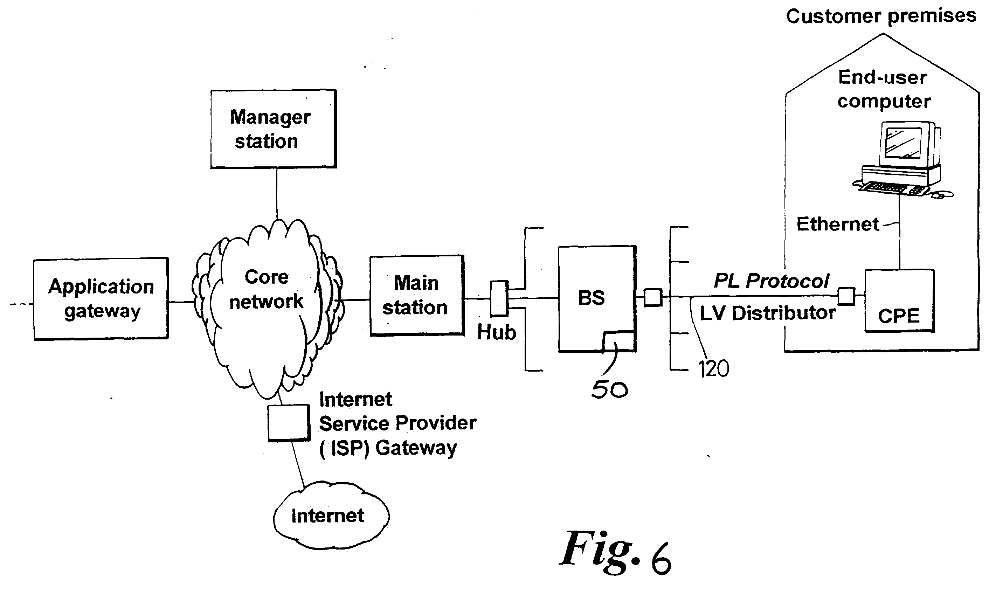

Figure 6 illystrates an OFDM power line telecommunications system in accordance with the present invention, incorporating a modem transmitter 50 as discussed above.

### Total Bandwidth Coverage

Frequency masking for a, regulatory reasons b, within these predetermined masks sub allocation of frequency determined by channel characteristics. This optimises use of bandwidth and maximises data rate

Sub band allocation is done by selecting from a set of pre-determined mixtures of coding depth, modulation and frequency allocation. This alleviates the computational complexity of allocating individual carriers

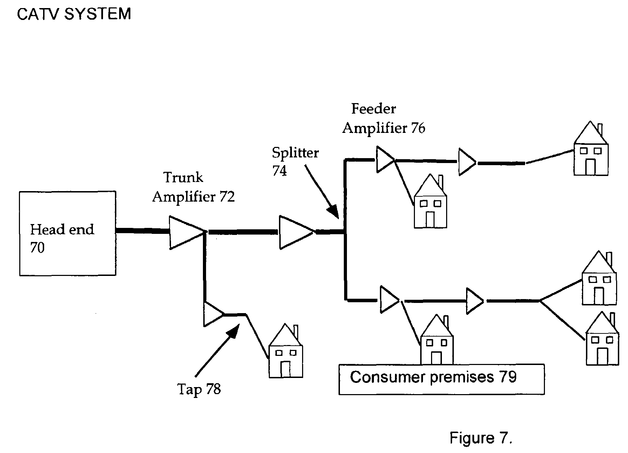

Figure 7 illustrates a CATV telecommunications system in accordance with the present invention. Principally it can be seen that the only functional difference between this system and a powerline system is in the media used to distribute to the consumer. The system is formed by a head end 70 which is coupled to a plurality of customer premises 79 through a standard series of components including a trunk amplifier 72, splitter 74, feeder amplifier 76 and tap 78.

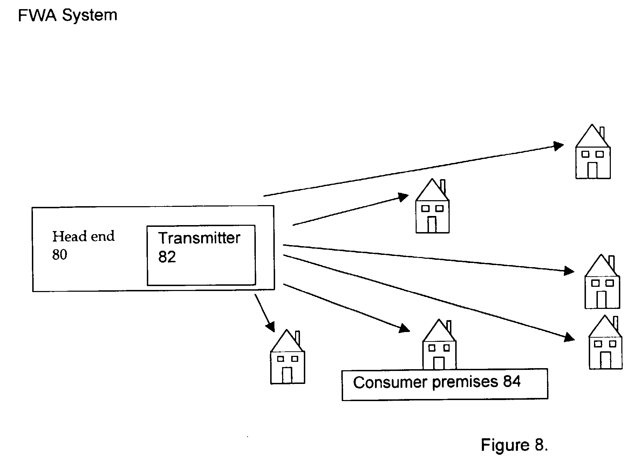

Figure 8 illustrates a FWA telecommunications system in accordance with the present invention. This figure again illustrates another type of media for distribution to consumers. However, again the method of operation and implementation of the protocol in accordance with the present invention is substantially the same as that described above with reference to power line systems. In this case the head end 80 includes a FWA transmitter 82 which transmits a signal which is received by a receiver not shown on one or more of the customer premises 84.

Modifications may be incorporated without departing from the scope or spirit of the present invention, as determined by a person skilled in the art.

## Claims

1. An OFDM transmission protocol in which the base station transmits specific OFDM symbols embedded in normal traffic and the symbols are identified by larger than normal guard intervals.

2. The protocol of claim 1, arranged for use in a power line telecommunications system.

3. The protocol of claim 1, arranged for use in a cable television telecommunications system.

4. The protocol of claim 1, arranged for use in a fixed wireless access telecommunications system.

5. The protocol of claim 1, wherein said symbols occur at 2 symbol increments, over a frame of more than 8 sequential symbol times.

6. The protocol of claim 1, wherein an out of lock indication is determined by the frame if the receiver cannot find a synchronous symbol in this period.

7. The protocol of claim 6, wherein if an out of lock indication is determined communications are suspended until frame has been recovered.

8. An OFDM power line transmitter comprising an encoder for encoding digital information, a transmission means for transmitting said information down a power line and a sub-band allocation means arranged to allocate sub-bands by selecting from a set of pre-determined parameters.

9. The transmitter of claim 8 wherein the parameters include mixtures of coding depth, modulation and frequency allocation.

10. A method of operating an OFDM transmitter comprising the step of transmits specific OFDM symbols embedded in normal traffic and identifying said symbols by larger than normal guard intervals.

11. The method of claim 10, wherein said symbols occur at 2 symbol increments, over a frame of more than 8 sequential symbol times, and wherein an out of lock indication is determined by the frame if the receiver cannot find a synchronous symbol in this period.

12. The method of claim 11, wherein if an out of lock indication is determined communications are suspended until frame has been recovered.

13. An OFDM power line communications system comprising: a power line for distributing electricity to a plurality of premises; and, a base station coupled to the power line, which station uses a part of the power line external to the base station as a communications medium, the base station including an OFDM power line transmitter comprising an encoder for encoding digital information, a transmission means for transmitting said information down said power line and a sub-band allocation means arranged to allocate sub-bands by selecting from a set of pre-determined parameters.

14. The system of claim 13, wherein the parameters include mixtures of coding depth, modulation and frequency allocation.

15. An OFDM cable television communications system comprising a cable television system for delivering television to a plurality of premises; and a base station coupled to the cable, which station uses a part of the cable external to the base station as a communications medium, the base station including an OFDM power line transmitter comprising an encoder for encoding digital information, a transmission means for transmitting said information down said cable and a sub-band allocation means arranged to allocate sub-bands by selecting from a set of pre-determined parameters

16. An OFDM fixed wireless access communications system comprising a base station including an OFDM fixed wireless access transmitter comprising an encoder for encoding digital information, a transmission means for transmitting said information and a sub-band allocation means arranged to allocate sub-bands by selecting from a set of pre-determined parameters
